# EUROPÄISCHE PATENTANMELDUNG

(11) **EP 3 988 218 A1**
(43) Veröffentlichungstag der Anmeldung: **27.04.2022**
(21) Anmeldenummer: 20203929.3
(22) Anmeldetag: 26.10.2020
(51) Int. Cl.: B05C 11/10, B29B 13/02

(54) **SCHMELZGERÄT ZUM BEREITSTELLEN EINES AUFGESCHMOLZENEN MEDIUMS SOWIE ISOLATIONSKÖRPER ZUR VERWENDUNG IN EINEM SOLCHEN SCHMELZGERÄT**

(71) Anmelder: Robatech AG, 5630 Muri (CH)
(72) Erfinder: Wey, Marcel, 5614 Sarmenstorf (CH); Mösli, Urs, 8405 Winterhur (CH)
(74) Vertreter: Franke, Markus

(57) **Zusammenfassung**

Die vorliegende Erfindung betrifft ein Schmelzgerät (1) zum Bereitstellen eines aufgeschmolzenen Mediums, insbesondere zum Bereitstellen eines aufgeschmolzenen Klebstoffs. Das Schmelzgerät (1) weist ein Gehäuse (2) und einen innerhalb des Gehäuses (2) ausgebildeten Schmelztank (3) auf, wobei das Schmelzgerät (1) eine Einfüllöffnung (4) zum Einfüllen des aufzuschmelzenden Mediums aufweist, wobei das Schmelzgerät (1) einen die Einfüllöffnung (4) umlaufend umschließenden Wandungsabschnitt (5) aufweist, wobei das Schmelzgerät (1) einen den Wandungsabschnitt (5) abdeckenden, die Einfüllöffnung (4) umlaufend umschließenden Isolationskörper (6) aufweist, wobei der Isolationskörper (6) elastisch verformbar ist.

Ferner betrifft die Erfindung einen Isolationskörper (6) zur Verwendung in einem solchen Schmelzgerät (1).

## Beschreibung

Die vorliegende Erfindung betrifft ein Schmelzgerät zum Bereitstellen eines aufgeschmolzenen Mediums, insbesondere zum Bereitstellen eines aufgeschmolzenen Klebstoffs. Ferner betrifft die Erfindung einen Isolationskörper zur Verwendung in einem solchen Schmelzgerät.

In verschiedensten Industrien werden Schmelzklebstoffe eingesetzt, um Teile miteinander zu verbinden. Derartige Klebstoffe müssen vor dem Verarbeiten durch Einwirkung von Wärme vom festen Zustand in einen flüssigen Zustand bzw. pastösen Zustand überführt werden. Dies erfolgt durch Schmelzgeräte.

Das erfindungsgemäße Schmelzgeräte kann durchaus Bestandteil von einem anderen Gerät sein.

Das erfindungsgemäße Schmelzgerät kann durchaus auch weitere Komponenten, wie beispielsweise eine Pumpe zum Fördern des aufgeschmolzenen Mediums/Klebstoffs aufweisen. Ferner kann das Schmelzgerät auch einen Verteiler zum Ausgeben von geschmolzenem Klebstoff in mindestens eine an den Verteiler anschließbare Leitung aufweisen.

Das aufzuschmelzende Medium kann beispielsweise in Form von Granulat, Pellets, Blöcken oder Kerzen vorliegen.

Schmelzgeräte zum Bereitstellen eines aufgeschmolzenen Mediums, insbesondere Schmelzgeräte zum Bereitstellen eines aufgeschmolzenen Klebstoffs, weisen typischerweise ein Gehäuse und einen innerhalb des Gehäuses ausgebildeten Schmelztank auf. Der Schmelztank dient dem Aufschmelzen des aufzuschmelzenden Mediums, wobei der Schmelztank in der Regel mittels einer elektrischen Heizung beheizbar ist. Um dem Schmelzgerät, nämlich dem Schmelztank, das aufzuschmelzende Medium zuzuführen, weist das Schmelzgerät eine Einfüllöffnung auf. Über diese Einfüllöffnung wird das Medium in fester Form dem Schmelztank zugeführt. Dies kann manuell erfolgen.

Bei einem Zuführen von aufzuschmelzendem, insbesondere granularem, Medium im Betrieb des Schmelzgerät besteht die Problematik, dass der Bereich des Geräts, der die Einfüllöffnung umschließt bzw. an diese angrenzt, eine erhöhte Temperatur aufweist. Die Temperatur liegt typischerweise im Bereich der Temperatur des flüssigen Mediums oder geringfügig darunter. Abhängig von der Schmelztemperatur des aufzuschmelzenden Mediums kann der die Einfüllöffnung umschließende Bereich Temperaturen im Bereich von 60 °C bis zu 200 °C aufweisen. Abhängig von dem aufzuschmelzenden Medium kann der angrenzende Bereich auch durchaus höhere Temperaturen aufweisen. Dadurch besteht eine akute Verbrennungsgefahr für das Bedienpersonal. Um Verbrennungen zu vermeiden, muss typischerweise eine Schutzausrüstung beim manuellen Befüllen des Schmelzgeräts getragen werden. Gerade bei der Handhabung von relativ geringen Mengen von aufzuschmelzendem Klebstoff ist das Tragen einer Schutzausrüstung besonders hinderlich.

Insbesondere beim Tragen von Schutzausrüstung besteht die Problematik, dass Teile des festen Mediums, bspw. Klebstoff, nicht unmittelbar durch die Einfüllöffnung dem Inneren des Schmelztanks zugeführt werden, sondern Teile des aufzuschmelzenden Mediums in Bereiche des Schmelzgeräts gelangen, die an die Einfüllöffnung angrenzen. Beispielsweise können die zugeführten, aufzuschmelzenden Medien auf einen heißen Randbereich des Schmelztanks gelangen und aufgrund der erhöhten Temperatur in diesem Bereich zumindest teilweise aufgeschmolzen werden. Üblicherweise sind der Rand vom Schmelztank und die Auflagefläche von einem Deckel, der dem Verschließen der Öffnung dient, aus metallischen Werkstoffen oder harten, temperaturbeständigen Kunststoffen gefertigt. Aus Toleranzgründen und wegen der Materialpaarung ist es auf diese Weise nicht möglich, den Tank luftdicht zu verschließen. Das Aufschmelzen der in den Randbereich gelangenden Anteile des aufzuschmelzenden Mediums ist dahingehend problematisch, dass dieser Anteil des Mediums typischerweise nicht in das Innere des Schmelztanks gelangt und somit nicht weiter verarbeitet wird. Im Betrieb des Schmelzgeräts erfährt das nicht in den Bereich des Schmelztanks gelangende Medium eine Alterung, die mit einer Veränderung der Eigenschaften einhergeht. Insbesondere bei Klebstoffen besteht die Problematik, dass es besonders schwierig ist, diesen gealterten Klebstoff zu entfernen und das Schmelzgerät von diesem zu reinigen. Insbesondere bei längerer Betriebszeit verbrennt dieser Klebstoff langsam und verfärbt sich. Es kommt zu Verbrennungen des Klebstoffs und dieser wird dunkel bis schwarz und härtet typischerweise aus. Infolge dessen wird der die Öffnung umschließende Randbereich des Schmelzgeräts durch gealterten Klebstoff verunreinigt, wodurch es, bei Ablösung dieses gealterten Klebstoffs und Eindringen dieses gealterten Klebstoffs in das Innere des Schmelztanks, zu ungewollten Verunreinigungen des aufgeschmolzenen Mediums bzw. Klebstoffs kommt, was zu einer Beschädigung, insbesondere von mit aufgeschmolzenem Medium versorgten Auftragsköpfen, führen kann. Besonders problematisch sind fehlgeleitete Medien, die in Ecken, Kanten und/oder Vertiefungen des Schmelzgeräts eindringen, insbesondere solche, die sich angrenzend an die Einfüllöffnung des Schmelzgeräts befinden.

Besonders problematisch sind die Verunreinigungen im Randbereich der Einfüllöffnung dann, wenn das Schmelzgerät einen Deckel zum Verschließen der Einfüllöffnung aufweist, da aufgrund von abgelagertem Material, d.h. nicht in den Schmelztank gelangenden Medien, ggf. die Dichtwirkung des Deckels beeinträchtigt wird, wodurch die Wärmeisolationswirkung des Deckels beeinträchtigt werden kann und zudem die Gefahr besteht, dass schädliche Gase in größeren Mengen in die Umgebung des Schmelzgeräts gelangen. Derartige Gase können beispielsweise beim Aufschmelzen des aufzuschmelzenden Mediums entstehen.

Eine schlechte Dichtwirkung des Deckels ist auch dahingehend problematisch, dass Umgebungsluft in den Bereich des Schmelztanks gelangen kann, was dazu führen kann, dass der in dem Schmelztank aufgeschmolzene, heiße Klebstoff verbrennt bzw. oxidiert und altert. Bei reaktiven Klebstoffen, wie beispielsweise Polyurethan (PUR)-Klebstoffen kann durch den Einfluss von Luftfeuchtigkeit eine ungewollte Aushärtung des Klebstoffs im Schmelztank erfolgen.

Aus der EP 0 075 428 A1 ist eine Vorrichtung zum Schmelzen von festem thermoplastischen Material und zum Versorgen einer Abgabeeinrichtung mit geschmolzenem thermoplastischen Material bekannt. Diese Vorrichtung umfasst einen Vorratsbehälter oder Schmelztank, welcher einen Boden, von diesem aufragende Seitenwände aufweist und oben offen ist, weiter enthaltend elektrische Widerstands-Heizmittel, die innerhalb des Bodens befestigt sind. Ferner umfasst die Vorrichtung einen über dem offenen Ende des Vorratsbehälters angeordneten Deckel zum Verschließen der Öffnung.

Aufgabe der vorliegenden Erfindung ist es, ein Schmelzgerät bereitzustellen, das die vorgenannten Nachteile überwindet.

Diese Aufgabe wird durch ein Schmelzgerät, das die Merkmale des Patentanspruchs 1 aufweist, gelöst. Ferner wird die Aufgabe durch einen Isolationskörper, der die Merkmale des Patentanspruchs 15 aufweist, gelöst.

Das Schmelzgerät dient dem Bereitstellen eines aufgeschmolzenen Mediums, insbesondere dem Bereitstellen eines aufgeschmolzenen Klebstoffs. Das Schmelzgerät weist ein Gehäuse und einen innerhalb des Gehäuses ausgebildeten Schmelztank auf, wobei das Schmelzgerät eine Einfüllöffnung zum Einfüllen des aufzuschmelzenden Mediums aufweist. Das Schmelzgerät weist ferner einen die Einfüllöffnung umlaufend umschließenden Wandungsabschnitt auf, wobei das Schmelzgerät einen den Wandungsabschnitt abdeckenden, die Einfüllöffnung umlaufend umschließenden Isolationskörper aufweist. Der Isolationskörper ist elastisch verformbar.

Dadurch, dass der Isolationskörper elastisch verformbar ist, kann dieser besonders leicht, insbesondere werkzeuglos, installiert bzw. angebracht werden.

Da der Isolationskörper die Einfüllöffnung umlaufend umschließt, ist die Einfüllöffnung durch den Isolationskörper nicht verschlossen, sondern lediglich der die Einfüllöffnung umlaufend umschließende Wandungsabschnitt abgedeckt. Da dieser Wandungsabschnitt im Betrieb des Schmelzgeräts eine erhöhte Temperatur aufweist, wird durch die Abdeckung des Randbereichs mittels des Isolationskörpers die Gefahr, dass sich das Bedienpersonal an den heißen Flächen des Wandungsabschnitts verbrennt, deutlich reduziert. Ferner wird vermieden, dass beim Zuführen des Mediums dieser in Kontakt mit dem heißen Wandungsabschnitt gelangt und dort aufschmilzt und ggf. haften bleibt. Durch den abdeckenden Isolationskörper wird eine unmittelbare Kontaktierung von aufzuschmelzendem Medium und Wandungsabschnitt vermieden. Da der Isolationskörper an seiner dem Wandungsabschnitt abgewandten Oberfläche aufgrund der Isolationswirkung eine geringere Temperatur aufweist, wird ein Aufschmelzen von Medium bei Kontaktierung des Isolationskörpers vermieden oder zumindest reduziert.

Vorzugsweise weist das Material des Isolationskörpers bei Normalbedingungen eine Wärmeleitfähigkeit von 0,1 bis 0,5 W m⁻¹ K⁻¹ auf.

Da der Isolationskörper elastisch verformbar ist, ist bei Verwendung eines die Einfüllöffnung verschließenden Deckels eine besonders gute Dichtwirkung auch bei Fertigungstoleranzen, insbesondere bei erhöhten Fertigungstoleranzen, gewährleistet. Dadurch wird der Wärmeverlust verringert, die Emission von Klebstoffdämpfen vermieden, die Alterung des Mediums in Form von Oxidation von Klebstoff und ein Aushärten von reaktiven Klebstoffen durch Vermeidung von Eintrag von Umgebungsluft, insbesondere Wasserdampf, minimiert.

Dadurch, dass der Isolationskörper elastisch verformbar ist, kann dieser in besonders einfacher Art und Weise, insbesondere werkzeuglos in dem Schmelzgerät installiert werden. Bei sehr starken Beschädigungen oder Verschmutzungen oder sonstigem Verschleiß kann der Isolationskörper besonders einfach ausgetauscht werden.

Vorzugsweise ist der Isolationskörper klemmend in dem Schmelzgerät, insbesondere klemmend an dem Wandungsabschnitt, gehalten.

Die Elastizität des Isolationskörpers ist auch dahingehend als vorteilhaft anzusehen, dass besonders einfach ausgehärteter Klebstoff bzw. ausgehärtetes Medium von diesem entfernt werden kann. Da die ausgehärteten Medien, insbesondere ausgehärteter Klebstoff, in der Regel spröde ist, kann durch eine Verformung des Isolationskörpers die Haftung des ausgehärteten Mediums an dem Isolationskörper in besonders einfacher Art und Weise aufgebrochen werden. Insbesondere ist vorgesehen, dass zwecks Entfernung von ausgehärteten Medien von dem Isolationskörper der Isolationskörper von dem Schmelzgerät getrennt und anschließend verformt wird. Bei einem von dem Schmelzgerät entfernten Isolationskörper kann besonders einfach eine besonders starke Verformung des Isolationskörpers erfolgen.

Es ist durchaus denkbar, dass es sich bei dem Schmelztank um einen Vorschmelztank handelt. Es ist durchaus denkbar, dass an den Schmelztank ein Vorratsbereich für das aufgeschmolzene Medium anschließt.

Das Schmelzgerät kann durchaus Bestandteil eines anderen Geräts sein, beispielsweise einer Abgabeeinheit zum Ausgeben von Klebstoff.

Es ist auch durchaus denkbar, dass das Schmelzgerät weitere Komponenten, wie beispielsweise eine Förderpumpe, einen Verteiler für das aufgeschmolzene Medium, an dem Leitungen anschließbar sind, und/oder Steuerungselektronik umfasst.

Als besonders vorteilhaft wird es angesehen, wenn der Schmelztank mittels einer elektrischen Heizeinrichtung beheizbar ist.

Da der Isolationskörper elastisch verformbar ist, ist der Isolationskörper besonders widerstandsfähig gegen mechanische äußere Einflüsse. Im Gegensatz zu einer Verwendung von harten, temperaturbeständigen Kunststoffen, beispielsweise Duroplasten, als Isolationsmaterial, besteht bei der Verwendung eines elastisch verformbaren Isolationskörpers eine deutlich geringere Bruchgefahr.

Als besonders vorteilhaft wird es angesehen, wenn der Isolationskörper an seiner Außenseite eine glatte Oberfläche aufweist, insbesondere die nach außen weisende Oberfläche frei oder im Wesentlichen frei von Vertiefungen und/oder Hinterschnitten ist. Dadurch ist eine besonders einfache Reinigung des Isolationskörpers möglich. Zudem wird vermieden, dass Bestandteile des aufzuschmelzenden Mediums, insbesondere Granulatkörner, und Spritzer vom aufgeschmolzenen Medium sich in Vertiefungen oder Ecken festsetzen. In diesem Zusammenhang wird es auch als vorteilhaft angesehen, wenn Kanten der Außenseite bzw. Kanten der nach außen weisende Oberfläche verrundet sind.

Vorzugsweise weisen der Wandungsabschnitt und der Isolationskörper jeweils eine Öffnung auf. Vorzugsweise erstreckt sich ein die Öffnung aufweisender Teilbereich des Isolationskörpers bis in die Öffnung des Wandungsabschnitts. Die Gestaltung der Öffnung des Wandungsabschnitts und die Gestaltung der Öffnung des Isolationskörpers sowie die Anordnung der Öffnungen des Wandungsabschnitts und des Isolationskörpers zueinander können durchaus die Form der Einfüllöffnung bestimmen. So kann die Form der Einfüllöffnung beispielsweise ausschließlich durch die Form der Öffnung des Isolationskörpers bestimmt sein, beispielsweise wenn der Isolationskörper die Öffnung des Wandungsabschnitts vollständig ausfüllt, insbesondere derart, dass die Öffnung des Isolationskörpers innerhalb der Öffnung des Wandungsabschnitts ausgebildet ist.

Vorzugsweise weist der Isolationskörper eine geschlossene Fläche auf, die lediglich zur Bildung der Einfüllöffnung eine Öffnung aufweist.

Als besonders vorteilhaft wird es angesehen, wenn der Isolationskörper ein Elastomer aufweist, vorzugsweise aus einem Elastomer besteht.

Besonders bevorzugt weist der Isolationskörper ein Silikonkautschuk oder ein Silikonelastomer auf. In einer besonders bevorzugten Ausführungsform besteht der Isolationskörper aus Silikonkautschuk oder einem Silikonelastomer.

Durch die geringere Oberflächentemperatur des Isolationskörpers, insbesondere des als Elastomerformteil ausgebildeten Isolationskörpers, wird das Medium das mit dem Isolationskörper in Berührung kommt, insbesondere der Klebstoff der mit dem Isolationskörper in Berührung kommt, weniger schnell aufgeschmolzen und oxidiert bzw. verbrennt aufgrund der geringeren Temperatur weniger schnell.

Als besonders vorteilhaft wird es angesehen, wenn der Isolationskörper den Wandungsabschnitt zumindest in einem der Eingangsöffnung zugewandten Bereich, unmittelbar und flächig kontaktiert. Dadurch wird vermieden, dass Medium in den Bereichen zwischen den Wandungsabschnitt und den Isolationskörper gelangt. Ein Eindringen von Medium in den Zwischenbereich zwischen Wandungsabschnitt und Isolationskörper kann zudem zu ungewollter starker Haftung des Isolationskörpers an dem Wandungsabschnitt führen, wodurch ein einfaches Ablösen des Isolationskörpers von dem Wandungsabschnitt beeinträchtigt wird.

Als besonders vorteilhaft wird es angesehen, wenn der Isolationskörper bei Anordnung in dem Schmelzgerät gegenüber einem Grundzustand des Isolationskörpers gedehnt ist. Der Grundzustand entspricht dabei dem Zustand des Isolationskörpers vor dem Anordnen in dem Schmelzgerät, somit einem Zustand ohne Einwirken von äußeren Kräften. Dadurch werden eine besonders enge Anlage und ein guter Halt des Isolationskörpers begünstigt.

Als besonders vorteilhaft wird es angesehen, wenn der Isolationskörper kraftschlüssig und/oder formschlüssig mit dem Gehäuse und/oder dem Wandungsabschnitt zusammenwirkt. Vorzugsweise wirkt der Isolationskörper unmittelbar mit dem Gehäuse und/oder dem Wandungsabschnitt zusammen. Somit ist es nicht erforderlich, separate Befestigungsmittel, wie beispielsweise Schrauben, Klammern, Druckknöpfe oder Ähnliches vorzusehen. Derartige, zusätzliche Befestigungsmittel erhöhen zum einen den Aufwand beim Lösen bzw. Verbinden des Isolationskörper mit dem Schmelzgerät. Ferner bilden derartige zusätzliche Befestigungsmittel Kanten, Vertiefungen, oder sonstige Strukturen, an denen sich das aufzuschmelzende Medium anlagern könnte und schwierig davon zu entfernen ist.

Die Haltestruktur und die Gegenstruktur wirken vorzugsweise formschlüssig zusammen. Insbesondere ist vorgesehen, dass die Haltestruktur und/oder die Gegenstruktur in Art eines Hinterschnitts ausgebildet ist. Es ist auch durchaus denkbar, dass die Haltestruktur und die Gegenstruktur in Art einer Nut-Feder-Verbindung ausgebildet sind.

Bei dem Material des Wandungsabschnitts handelt es sich insbesondere um einen Kunststoff.

Vorzugsweise weist der Wandungsabschnitt einen Grundkörper aus glasfaserverstärktem Kunststoff, insbesondere einen Grundkörper aus glasfaserverstärktem Polyphenylensulfid (PPS), auf.

Bei dem Wandungsabschnitt handelt es sich vorzugsweise um ein Spritzgussteil.

Der Wandungsabschnitt weist insbesondere einen Grundkörper aus Metall oder aus einer Metalllegierung auf. Vorzugsweise handelt es sich bei dem Grundkörper um ein Gussteil.

Es ist aber auch durchaus denkbar, dass der Wandungsabschnitt Blechteile aufweist, insbesondere aus Blechteilen gebildet ist.

Es ist durchaus denkbar, dass der Wandungsabschnitt ein Bestandteil des Schmelztanks ist, insbesondere ein Bestandteil einer Wandung des Schmelztanks.

Als besonders vorteilhaft wird es angesehen, wenn der Wandungsabschnitt durch ein separates Bauteil gebildet ist, somit nicht Bestandteil des Schmelztanks ist.

In einer bevorzugten Ausführungsform wird der Isolationskörper über den Wandungsabschnitt, insbesondere einen Randbereich des Wandungsabschnitt, gestülpt.

In einer bevorzugten Ausführungsform ist der Isolationskörper einstückig ausgebildet.

Es wird als vorteilhaft angesehen, wenn der Isolationskörper ein dem Schmelztank abgewandtes Ende des Wandungsabschnitts abdeckt, insbesondere der Isolationskörper das dem Schmelztank abgewandte Ende des Wandungsabschnitts aufnimmt. Zu diesem Zweck ist es durchaus denkbar, dass der Isolationskörper auf einer dem Wandungsabschnitt zugewandten Seite eine Nut, insbesondere eine umlaufende Nut, aufweist.

Es wird als besonders vorteilhaft angesehen, wenn der Isolationskörper den Wandungsabschnitt in Einfüllrichtung des Mediums abdeckt. Die Einfüllrichtung ist insbesondere durch eine durch die Geometrie der Einfüllöffnung definierte Achse und die Lage des Schmelztanks festgelegt, beispielsweise durch eine Symmetrieachse, wobei die Einfüllrichtung entlang der Symmetrieachse in Richtung des Schmelztanks verläuft. Bei einer kreisrunden Öffnung verläuft die Einfüllrichtung beispielsweis durch den Mittelpunkt und senkrecht zu einer durch den Kreis definierten Ebene. Bei einem Abdecken in Einfüllrichtung wird eine besonders gute Abdeckung des Wandungsabschnitts erreicht.

Es wird als vorteilhaft angesehen, wenn der Isolationskörper den Wandungsabschnitt auf einer Außenseite des Wandungsabschnitts zumindest teilweise, vorzugsweise vollständig, abdeckt, insbesondere kontaktiert. Unter Außenseite wird vorliegend die Seite des Wandungsabschnitts verstanden, die der Einfüllöffnung abgewandt ist.

Als besonders vorteilhaft wird es angesehen, wenn der Isolationskörper den Wandungsabschnitt auf einer Innenseite des Wandungsabschnitts zumindest teilweise, vorzugsweise vollständig, abdeckt, insbesondere kontaktiert. Unter Innenseite wird vorliegend die Seite des Wandungsabschnitts verstanden, die der Einfüllöffnung zugewandt ist.

Vorzugsweise ist der Wandungsabschnitt und/oder der Isolationskörper, bezogen auf eine durch eine Standfläche des Schmelzgeräts gebildete Ebene, zumindest abschnittsweise geneigt. So ist es durchaus denkbar, dass der Wandungsabschnitt und/oder ein Teilbereich des Isolationskörpers in Art eines Parallelepipeds ausgebildet ist.

Als besonders vorteilhaft wird es angesehen, wenn der Wandungsabschnitt und/oder der Isolationskörper trichterförmig ausgebildet ist oder zumindest einen trichterförmig ausgebildeten Bereich aufweist. Dadurch wird das Einbringen von Medium durch die Einfüllöffnung in den Schmelztank erleichtert.

Um eine Verunreinigung von an die Einfüllöffnung angrenzenden Bereichen des Schmelzgeräts zu vermeiden, wird es als vorteilhaft angesehen, wenn der Isolationskörper einen Abdeckabschnitt aufweist, wobei der Abdeckabschnitt einen an den Wandungsabschnitt angrenzenden Bereich des Schmelzgeräts abdeckt, insbesondere in Einfüllrichtung abdeckt, insbesondere diesen Bereich unmittelbar kontaktiert.

In diesem Zusammenhang wird es als besonders vorteilhaft angesehen, wenn sich der Isolationskörper bis in gegenüberliegende Randbereiche des Schmelzgeräts erstreckt, insbesondere bis zu gegenüberliegenden Gehäuseabschnitten des Gehäuses erstreckt.

Um eine besonders gute Wärmeisolation zu erreichen und um ein Eindringen von Fremdkörpern in den Schmelztank sowie ein Eindringen von Umgebungsluft in den Bereich des Schmelztanks und/oder einen Austritt von Gasen aus dem Schmelztank in die Umgebung zu vermeiden, wird es als vorteilhaft angesehen, wenn das Schmelzgerät einen Deckel aufweist zum Verschließen der Einfüllöffnung. Vorzugsweise ist der Deckel in dem Gehäuse gelagert. Als besonders vorteilhaft wird es angesehen, wenn der Deckel schwenkbar in dem Gehäuse gelagert ist. Es ist auch durchaus denkbar, dass der Deckel Bestandteil des Gehäuses ist.

Vorzugsweise weisen der Deckel und der Isolationskörper jeweils eine Dichtfläche auf, wobei in einer die Einfüllöffnung verschließenden Anordnung des Deckels die Dichtfläche des Deckels und die Dichtfläche des Isolationskörper einander kontaktieren.

Es ist aber auch durchaus denkbar, dass an einen Randbereich des Wandungsabschnitts eine Dichtlippe angespritzt ist. Ferner ist es auch durchaus denkbar, dass der Isolationskörper oder der Wandungsabschnitt eine umlaufende Nut aufweist, wobei in dieser Nut eine Dichtlippe angeordnet ist.

Vorzugsweise ist der Deckel unabhängig vom Isolationskörper handhabbar.

In einer besonders bevorzugten Ausführungsform ist vorgesehen, dass der Isolationskörper eine Dichtlippe aufweist. Vorzugsweise steht die Dichtlippe in Richtung des Deckels und/oder entgegen der Einfüllrichtung hervor. Bevorzugt umschließt die Dichtlippe die Einfüllöffnung umlaufend.

Als vorteilhaft wird es ferner angesehen, wenn der Deckel einen Grundkörper und einen in dem Grundkörper federnd gelagerten und/oder beweglich gelagerten und/oder elastisch verformbaren Dichtkörper aufweist, wobei der Dichtkörper die Dichtfläche bildet. Die Dichtfläche als solche kann durchaus steif ausgebildet sein. Insbesondere kann die Dichtfläche eines elastisch verformbaren Dichtkörpers durchaus steif ausgebildet sein. Der Dichtkörper kann durchaus als Platte, insbesondere als harte Platte, ausgebildet sein. Die Platte als solche kann beispielsweise aus einem Hartplastik, einem Metall oder einer Metalllegierung gefertigt sein. Die Platte ist vorzugsweise mittels elastisch verformbarer Federn, beispielsweise mittels Spiralfedern, in dem Grundkörper federnd gelagert. Eine federnde Lagerung kann alternativ oder zusätzlich mittels einem elastisch verformbaren Material erfolgen, beispielsweise in Form eines elastisch verformbaren Zwischenstücks zwischen Grundkörper und Dichtkörper. Als elastisch verformbares Material kommt insbesondere ein Silikonschaum oder Ähnliches in Betracht. Vorzugsweise handelt es sich bei dem Material um ein wärmeisolierendes Material. Bei einer derartigen Ausführungsform mit einem federnd gelagerten Dichtkörper und/oder beweglich gelagerten und/oder elastisch verformbaren Dichtkörper wird eine besonders gute Dichtwirkung erreicht. Dadurch wird der Wärmeverlust verringert, die Emission von beim Aufschmelzen auftretenden Dämpfen vermieden, die Alterung in Form von Oxidation und ein Aushärten durch Vermeidung von Eintrag von Umgebungsluft minimiert.

Im Zusammenhang mit einem Deckel wird es als zweckmäßig angesehen, wenn das Gewicht des Deckels so gewählt ist, dass der Deckel durch Eigengewicht mit ausreichender Kraft auf den Isolationskörper, insbesondere eine Dichtlippe des Isolationskörpers, drückt. Dadurch kann auf zusätzliche Verriegelungsmittel verzichtet werden.

Als besonders vorteilhaft wird es angesehen, wenn der Isolationskörper und der Wandungsabschnitt und/oder der Isolationskörper und das Gehäuse und/oder der Isolationskörper und der Deckel farblich kontrastieren. Durch diese Gestaltung kann in einfacher Art und Weise von einem Bedienpersonal erkannt werden, ob das Schmelzgerät mit einem Isolationskörper bestückt ist. Ferner kann durch die farbliche Kontrastierung in einfacher Art und Weise erkannt werden, wo sich die Einfüllöffnung des Schmelzgeräts befindet. Dies erleichtert einem Bediener, insbesondere einem ungeschulten Bediener, die Handhabung des Schmelzgeräts, insbesondere das Befüllen des Schmelztanks. Die farbliche Kontrastierung kann beispielsweise derart sein, dass das Gehäuse weiß gestaltet ist und der Isolationskörper schwarz gestaltet ist. Es ist aber auch durchaus denkbar, dass der Isolationskörper in einer bunten Farbe, somit nicht schwarz, weiß oder transparent, sondern beispielsweise rot, grün oder blau, und das Gehäuse weiß gestaltet ist. Vorzugsweise ist der Isolationskörper in einem hellen grün, insbesondere Pantone 376 C, gestaltet.

Als besonders vorteilhaft wird es angesehen, wenn der Isolationskörper bei geschlossenem Deckel von außen sichtbar ist. Dadurch kann auch bei geschlossenem Deckel in einfacher Art und Weise erkannt werden, ob das Schmelzgerät mit einem Isolationskörper bestückt ist. Dadurch wird vermieden, dass, beispielsweise bei Entfernung des Isolationskörpers zwecks Reinigung des Isolationskörpers, das Schmelzgerät unbeabsichtigt in Betrieb genommen und/oder der Deckel geöffnet wird. Ferner wird, falls dieses Gerät doch in Betrieb genommen wurde, für das Bedienpersonal erkennbar, dass das entsprechende Gerät nicht mit einem Isolationskörper bestückt ist, wodurch Verbrennungen durch Handhabung des Geräts im Betrieb vermieden werden.

Vorzugsweise ist der Isolationskörper zumindest angrenzend an die Einfüllöffnung, vorzugsweise der gesamte Isolationskörper, einfarbig gestaltet. Insbesondere ist der Isolationskörper in Schwarz oder in einer bunten Farbe, beispielsweise in Grün, insbesondere in Pantone 376 C, gestaltet. Bei einer einfarbigen Gestaltung können besonders einfach an dem Isolationskörper anhaftende Verunreinigungen, bspw. verbrannter Klebstoff, erkannt werden. Auch im Zusammenhang mit einer farblichen Gestaltung des Isolationskörpers wird die Verwendung eines Elastomers, insbesondere eines Silikons bzw. Silikonelastomers als vorteilhaft angesehen, da sich Elastomere besonders gut und einfach einfärben lassen.

Eine Farbgebung und/oder eine Formgebung des Isolationskörpers und/oder eine Farbgebung des Gehäuses kann durchaus auch als Erkennungsmerkmal für ein bestimmtes Produkt oder für einen bestimmten Lieferanten dienen.

Ferner kann durch die Farbgebung des Isolationskörpers in einfacher Art und Weise eine optisch ansprechende Gestaltung erzielt werden.

Vorzugsweise weist das Gehäuse und/oder der Deckel Griffmulden zum Handhaben des Deckels auf. Als besonders vorteilhaft wird es angesehen, wenn sich der Isolationskörper bis in den Bereich der Griffmulden erstreckt. Dadurch ist zum einen die Griffmulde besonders gut von dem heißen Schmelztank bzw. dem heißen Wandungsabschnitt thermisch isoliert und ferner ist bei einer Gestaltung mit Griffmulden der Isolationskörper besonders gut von außen sichtbar.

Vorzugsweise sind die Sichtflächen des Isolationskörpers als glatte Flächen ausgebildet. Vorzugsweise weist der Isolationskörper eine glatte Oberseite auf. An seiner Unterseite weist der Isolationskörper vorzugsweise Stützstrukturen zur Erhöhung der Formstabilität auf. Bei diesen Stützstrukturen handelt es sich beispielsweise um Stege. Dadurch wird eine gute Verformbarkeit bei dennoch ausreichender Formstabilität erreicht. Als besonders vorteilhaft wird es angesehen, wenn der Isolationskörper an seiner Unterseite Freiräume, bspw. in Form von Rücksprüngen oder Mulden, aufweist. Dadurch wird Material gespart und zudem eine besonders gute Isolation von denjenigen Komponenten des Schmelzgeräts erreicht, an denen die Unterseite des Isolationskörpers anliegt.

Die Härte des für den Isolationskörper verwendeten Werkstoffs liegt vorzugsweise zwischen 40 Shore A und 90 Shore A, besonders bevorzugt zwischen 50 Shore A und 80 Shore A.

Das Einfüllen bzw. Zuführen des aufzuschmelzenden Mediums kann auch mittels einer Fördereinrichtung, beispielsweise eine pneumatische Fördereinrichtung erfolgen.

Das Schmelzgerät kann durchaus einen Anschluss zum Anschließen einer Zuleitung für das aufzuschmelzende Medium aufweisen. Der Anschluss kann beispielsweise im Bereich des Deckels ausgebildet sein. Derartige Anschlüsse bzw. Zuleitungen können insbesondere bei granularen Medien Anwendung finden. Eine solche Zuleitung kann beispielsweise mit einer Fördereinrichtung verbunden werden oder verbunden sein.

Der erfindungsgemäße Isolationskörper dient insbesondere zur Verwendung als Isolationskörper in einem der vorgenannten Ausführungsformen des Schmelzgeräts. Die im Zusammenhang mit dem Schmelzgerät offenbarten Ausführungsformen des Isolationskörpers gelten entsprechend für den Isolationskörper als solchen.

In den nachfolgenden Figuren ist die Erfindung anhand von einem Ausführungsbeispiel näher dargestellt, ohne auf dieses beschränkt zu sein.

Es zeigen:
- Fig. 1: eine erste Ausführungsform eines Schmelzgeräts in einer perspektivischen Ansicht,
- Fig. 2: das Schmelzgerät gemäß Fig. 1 ohne einen eine Einfüllöffnung abdeckenden Deckel, in einer perspektivischen Ansicht,
- Fig. 3: das Schmelzgerät gemäß Fig. 2 in einer Draufsicht,
- Fig. 4: das Schmelzgerät gemäß Fig. 2 ohne Isolationskörper, in einer perspektivischen Ansicht,
- Fig. 5: ein Bestandteil des Schmelzgeräts gemäß Fig. 2, nämlich ein Einfülltrichter, in einer perspektivischen Ansicht,
- Fig. 6: der Einfülltrichter gemäß Fig. 5 mit daran angeordnetem Isolationskörper, in einer perspektivischen Ansicht,
- Fig. 7: der Einfülltrichter gemäß Fig. 5 in einer Ansicht wie in Fig. 6,
- Fig. 8: der Isolationskörper gemäß Fig. 6, in einer Ansicht wie in Fig. 6,
- Fig. 9: der Isolationskörper gemäß Fig. 6, in einer weiteren perspektivischen Ansicht,
- Fig. 10: die Anordnung gemäß Fig. 6 in einer Draufsicht,
- Fig. 11: der Isolationskörper gemäß Fig. 6 in einer Draufsicht,
- Fig. 12: der Einfülltrichter gemäß Fig. 5 in einer Draufsicht,
- Fig. 13: eine zweite Ausführungsform des Schmelzgeräts in einer Ansicht wie in Fig. 1,
- Fig. 14: die zweite Ausführungsform des Schmelzgeräts in einer Ansicht wie in Fig. 2,
- Fig. 15: die zweite Ausführungsform des Schmelzgeräts in einer Ansicht wie in Fig. 3,
- Fig. 16: ein Teilbereich des Schmelzgeräts in einer Schnittansicht bei geschlossenem Deckel,
- Fig. 17: der Teilbereich des Schmelzgeräts gemäß Fig. 16 in einer Schnittansicht bei geöffnetem Deckel.

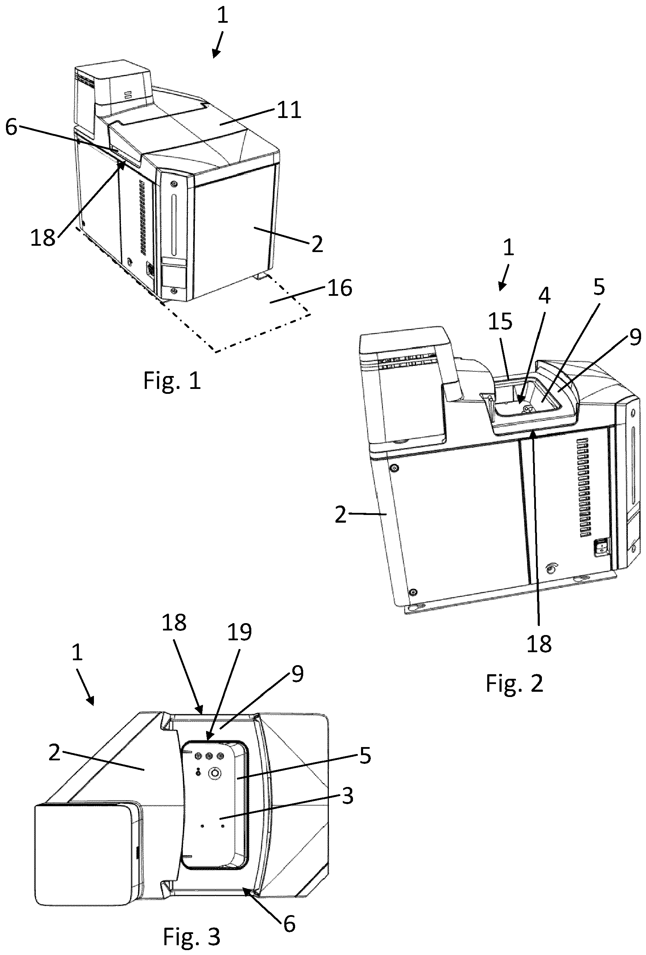

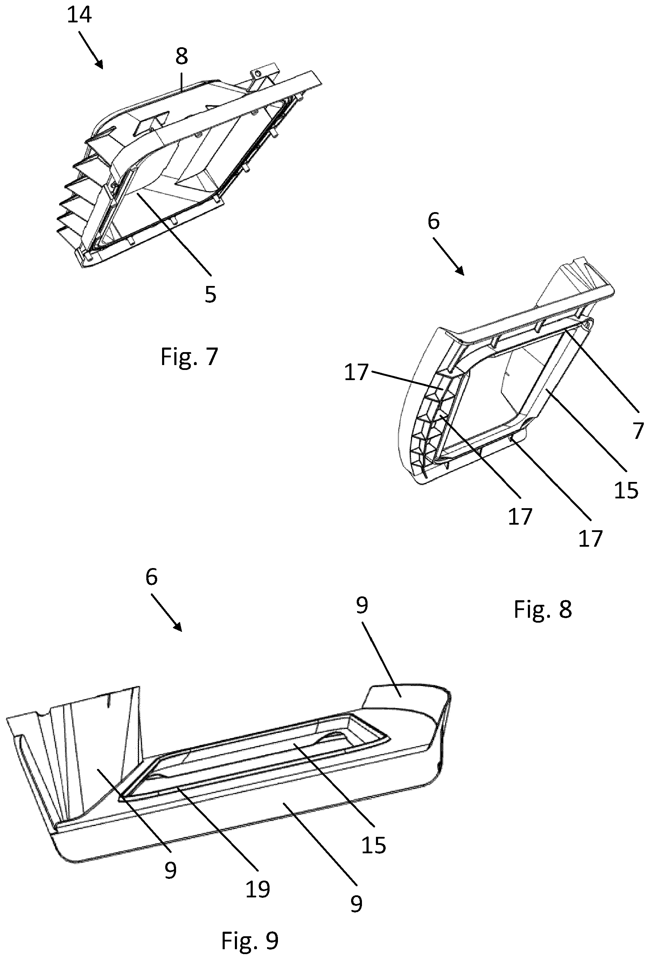

Die Fig. 1 bis 12 zeigen eine erste Ausführungsform des erfindungsgemäßen Schmelzgeräts 1. Das Schmelzgerät 1 dient dem Bereitstellen eines aufgeschmolzenen Klebstoffs.

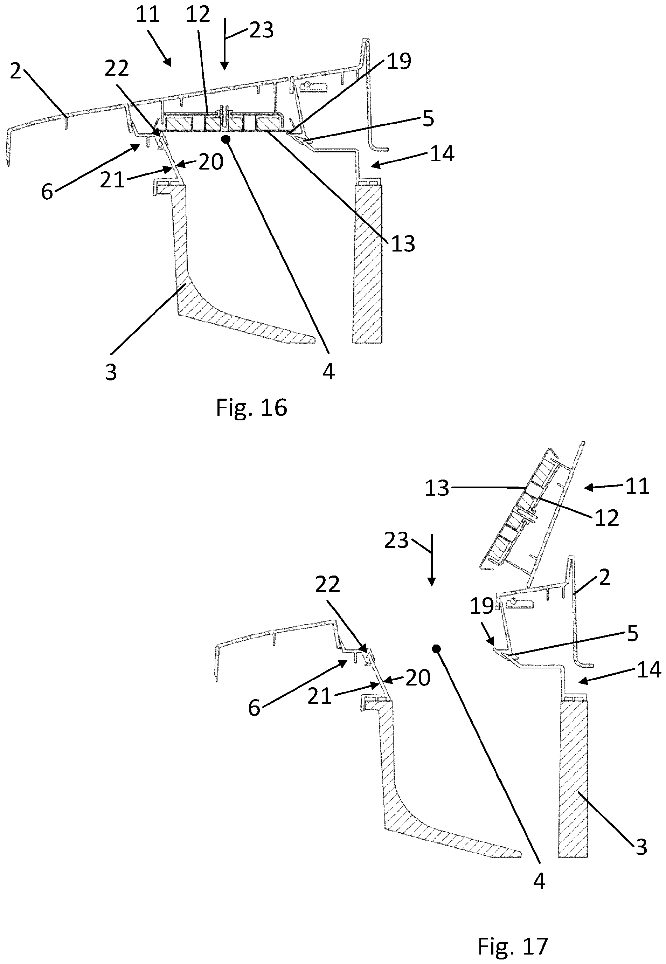

Das Schmelzgerät 1 weist ein Gehäuse 2 und einen Schmelztank 3 auf, wobei der Schmelztank 3 innerhalb des Gehäuses 2 ausgebildet ist und von dem Gehäuse umschlossen wird. Das Schmelzgerät 1 weist eine Einfüllöffnung 4 zum händischen Einfüllen des aufzuschmelzenden Mediums auf. Das aufzuschmelzende Medium kann beispielsweise mittels einer kleinen Schaufel oder dergleichen oder direkt aus einem Vorratsgebinde durch die Einfüllöffnung 4 dem Schmelztank 3 zugeführt werden. Das Einfüllen erfolgt vorzugsweise in Richtung des in Fig. 16 gezeigten Pfeils 23. Das Schmelzgerät 1 weist einen die Einfüllöffnung 4 umlaufend umschließenden Wandungsabschnitt 5 auf, wobei dieser Wandungsabschnitt 5 vorliegend Bestandteil eines Einfülltrichters 14 ist. Dieser Einfülltrichter 14 ist als separates Bauteil und einstückig ausgebildet. Der Einfülltrichter 14 ist mittels nicht näher dargestellten Verbindungsmitteln, vorliegend Schrauben, in dem Schmelzgerät 1 befestigt, beispielsweise mit dem Schmelztank 3 verschraubt oder einer innenliegenden Rahmenkonstruktion des Schmelzgeräts 1 verschraubt. Es ist aber auch denkbar, dass der Wandungsabschnitt 5 durch eine Blechkonstruktion gebildet ist.

Das Schmelzgerät 1 weist ferner eine nicht näher dargestellte elektrische Heizeinrichtung zum Erwärmen des Schmelztanks 3 und somit des in dem Schmelztank 3 eingebrachten Mediums auf. Zudem weist das Schmelzgerät 1 eine Pumpe zum Fördern des aufgeschmolzenen Mediums zu einem Verbraucher auf.

Das Schmelzgerät 1 weist einen den Wandungsabschnitt 5 des Einfülltrichters 14 abdeckenden, die Einfüllöffnung 4 umlaufend umschließenden, einstückigen Isolationskörper 6 auf. Der Isolationskörper 6 ist elastisch verformbar. Konkret besteht der Isolationskörper 6 vorliegend aus einem Silikonelastomer.

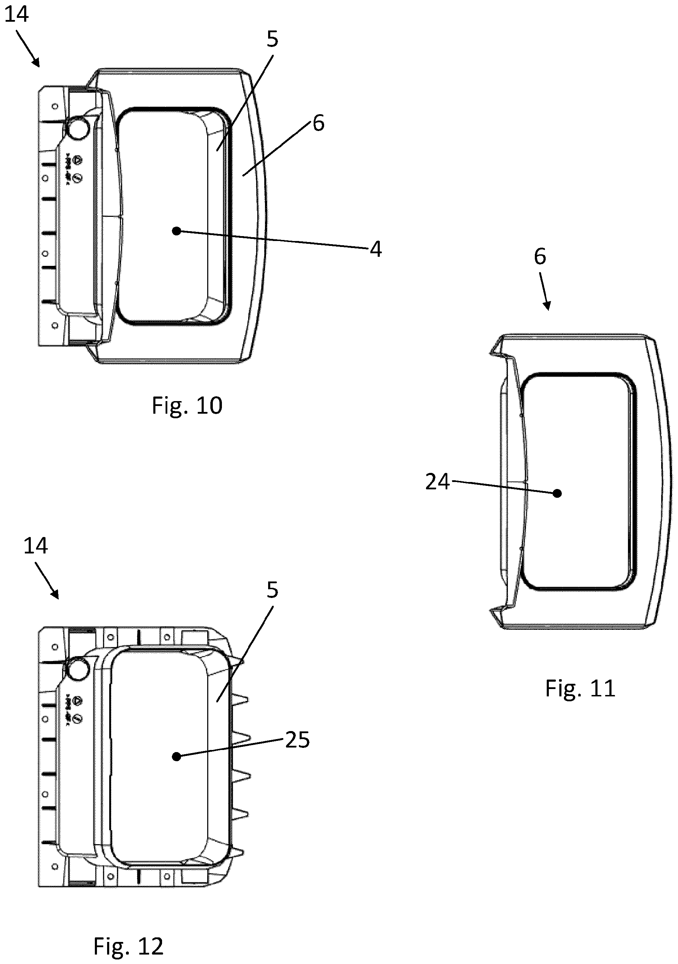

Wie insbesondere aus den Figuren 10 bis 12 hervorgeht, weisen sowohl der Einfülltrichter 14 als auch der Isolationskörper 6 jeweils eine Öffnung 24, 25 auf, wobei der Isolationskörper 6 und der Einfülltrichter 14 derart angeordnet sind, dass die beiden Öffnungen 24, 25 einander teilweise überlappen und auf diese Weise die Einfüllöffnung 4 bilden. Vorliegend ist ein die Öffnung 24 aufweisender Teilbereich des Isolationskörpers 6 teilweise innerhalb der Öffnung 25 des Einfülltrichters 14 angeordnet. Dementsprechend ist die Form der Einfüllöffnung 4 in Richtung des Pfeils 23 zunächst durch die Form der Öffnung 24 des Isolationskörpers 6 und anschließend durch die Form der Öffnung 25 des Einfülltrichters 14 bestimmt.

Vorliegend ist der Isolationskörper 6 kraftschlüssig und formschlüssig mit dem Wandungsabschnitt 5 des Einfülltrichters 14 verbunden. Zu diesem Zweck weist der Isolationskörper 6 eine Haltestruktur 7 in Form einer umlaufenden Nut mit Hinterschnitt auf und der Wandungsabschnitt 5 weist eine zu der Haltestruktur 7 korrespondierende Gegenstruktur 8 auf. Vorliegend ist die Gegenstruktur 8 durch einen nach außen hervorstehenden, die Einfüllöffnung 4 umlaufend umschließenden Vorsprung gebildet. Der Isolationskörper 6 nimmt vorliegend ein die Gegenstruktur 8 aufweisendes Ende 22 des Wandungsabschnitts 5 in der als Nut ausgebildeten Haltestruktur 7 auf.

Das Schmelzgerät 1 weist keinerlei zusätzliche Haltemittel zum Befestigen des Isolationskörpers 6 in dem Schmelzgerät 1 auf. Aufgrund der elastischen Verformbarkeit des Isolationskörpers 6 kann der Isolationskörper 6 in einfacher Art und Weise, insbesondere werkzeuglos, mit dem Wandungsabschnitt 5 verbunden werden.

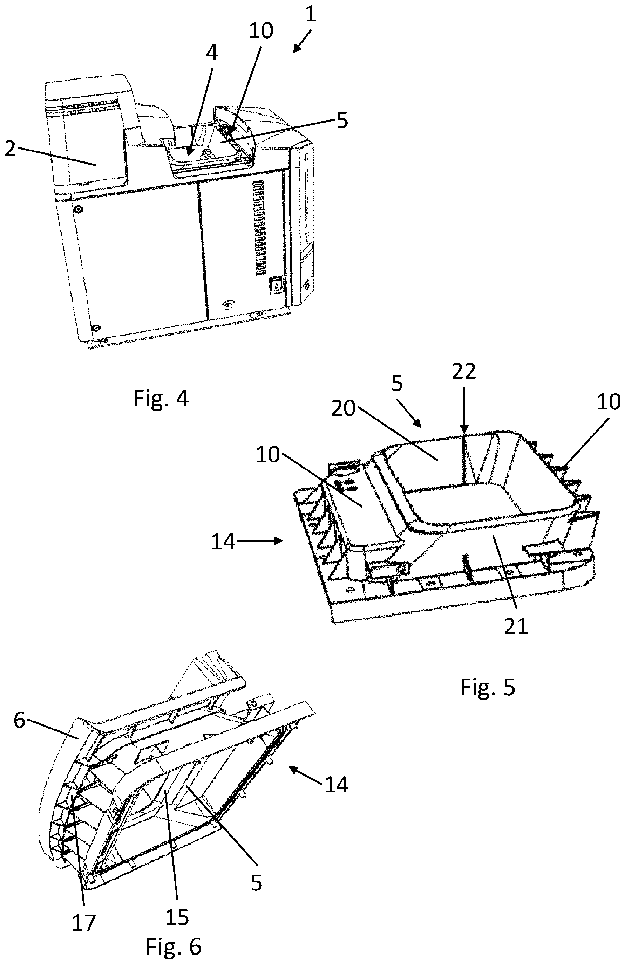

Wie insbesondere der Fig. 6 und der Fig. 16 zu entnehmen ist, kontaktiert der Isolationskörper 6 den Wandungsabschnitt 5 unmittelbar und flächig.

Wie insbesondere den Fig. 16 und 17 zu entnehmen ist, liegt der Isolationskörper 6 an einer der Einfüllöffnung 4 zugewandten Innenseite 20 des Wandungsabschnitts 5, einer der Einfüllöffnung 4 abgewandten Außenseite 21 des Wandungsabschnitts 5 und an dem dem Schmelztank 3 abgewandten Ende 22 des Wandungsabschnitts 5 an dem Wandungsabschnitt 5 an. Zwecks Anlage an der Innenseite 20 des Wandungsabschnitts 5 weist der Isolationskörper 6 einen die Einfüllöffnung 4 umlaufend umschließenden Endabschnitt 15 auf.

Der Wandungsabschnitt 5 und der umlaufende Endabschnitt 15 des Isolationskörpers 6 ist, bezogen auf eine durch die eine Standfläche des Schmelzgeräts 1 gebildete Ebene 16, geneigt.

Wie insbesondere den Fig. 2 und 3 zu entnehmen ist, weist der Isolationskörper 6 einen Abdeckabschnitt 9 auf, wobei der Abdeckabschnitt 9 einen an den Wandungsabschnitt 5 angrenzenden Bereich 10 des Schmelzgeräts 1 abdeckt, wobei der Abdeckabschnitt 9 vorliegend diesen Bereich 10 unmittelbar kontaktiert. Der Bereich 10 ist vorliegend im Wesentlichen durch den Einfülltrichter 14 und durch im Bereich des Gehäuses 2 ausgebildete Griffmulden 18 gebildet.

Vorliegend weist das Schmelzgerät 1 einen schwenkbar in dem Gehäuse 2 gelagerten Deckel 11 zum Verschließen der Einfüllöffnung 4 auf. Dieser Deckel 11 weist einen Grundkörper 12 und einen in dem Grundkörper 12 federnd gelagerten Dichtkörper 13 in Form einer harten Platte auf. Der Dichtkörper 13 bildet eine Dichtfläche des Deckels 11. Zwecks dichtem Verschließen der Einfüllöffnung 4 weist der Isolationskörper 6 ebenfalls eine Dichtfläche auf, wobei die Dichtfläche vorliegend durch eine die Einfüllöffnung 4 umlaufend umschließende, entgegen der Einfüllrichtung, somit in Richtung des geschlossenen Deckels 11, hervorstehende Dichtlippe 19 gebildet ist. Wie insbesondere aus den Figuren 16 und 17 hervorgeht, ist die Dichtlippe 19 in Teilbereichen, nämlich in den Figuren 16 und 17 rechts, bezogen auf das umlaufende Ende 22 nach radial innen, somit in den Figuren 16 und 17 nach links versetzt, ausgebildet. Somit deckt der Isolationskörper 6 in diesem Bereich die Öffnung 25 des Einfülltrichters 14 teilweise ab.

In einer die Einfüllöffnung 4 verschließenden Anordnung des Deckels 11, wie diese in der Fig. 1 dargestellt ist, kontaktiert die Dichtfläche des Deckels 11 die Dichtfläche des Isolationskörpers 6. Aufgrund der Elastizität der Dichtlippe 19 und der federnden Lagerung des Dichtkörpers 13 in den Grundkörper 12 des Deckels 11 wird eine besonders gute Dichtwirkung des Deckels 11 erzielt, da sich die Dichtflächen bei geschlossenem Deckel 11 aneinander anpassen können. Teiletoleranzen können auf diese Weise ausgeglichen werden und Montagearbeiten werden aufgrund des Wegfalls nicht notwendiger Einstellarbeiten vereinfacht und beschleunigt.

Im Zusammenhang mit einem Deckel 11 wird es als zweckmäßig angesehen, wenn das Gewicht des Deckels 11 so gewählt ist, dass der Deckel 11 durch Eigengewicht mit ausreichender Kraft auf die Dichtlippe 19 drückt. Dadurch kann auf zusätzliche Verriegelungsmittel verzichtet werden.

Die im Bereich des Gehäuses 2 ausgebildeten Griffmulden 18 erleichtern die Handhabung des Deckels 11, insbesondere das Öffnen des Deckels 11. Wie insbesondere der Fig. 2 und der Fig. 1 zu entnehmen ist, erstreckt sich der Isolationskörper 6 bis in den Bereich der Griffmulden 18.

Wie insbesondere der Fig. 3 zu entnehmen ist, ist die von außen zugängliche Fläche des Isolationskörpers 6, respektive die Oberseite des Isolationskörpers 6, im Wesentlichen glatt und frei von Ecken, Kanten, Hinterschnitten und Vertiefungen. Dadurch kann diese Oberfläche besonders einfach gereinigt werden. An seiner Unterseite weist der Isolationskörper 6 eine Vielzahl von Stegen 17 auf. Durch die Stege 17 weist der Isolationskörper 6 trotz geringem Materialbedarf eine ausreichende Formstabilität auf. Durch die Stege 17 wird zudem die Isolationswirkung verbessert, da die Kontaktfläche zum Einfülltrichter 14 verringert wird.

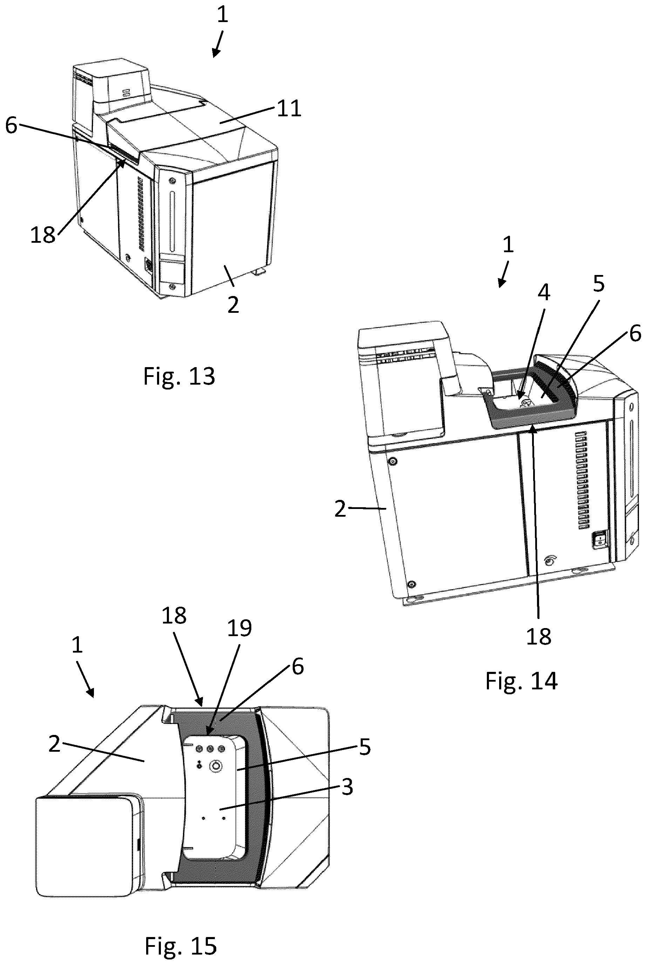

Die Fig. 13 bis 15 zeigen eine zweite Ausführungsform des Schmelzgeräts 1, wobei sich diese zweite Ausführungsform des Schmelzgeräts 1 von der ersten Ausführungsform des Schmelzgeräts 1 im Wesentlichen dadurch unterscheidet, dass der gesamte Isolationskörper 6 einfarbig gestaltet ist und zu dem Wandungsabschnitt 5, dem Gehäuse 2 und dem Deckel 11 farblich kontrastiert. Vorliegend ist der Isolationskörper 6 farbig, nämlich in Grün, gestaltet, wohingegen der Einfülltrichter 14 und somit der Wandungsabschnitt 5, das Gehäuse 2 und der Deckel 11 in einer hellen Farbe, vorliegend weiß, gestaltet sind. Wie insbesondere aus einem Vergleich der Fig. 1 bis 3 mit den Fig. 13 bis 15 hervorgeht, kann bei einer derartigen Gestaltung des Isolationskörpers 6 in einer farblichen Kontrastierung zu den übrigen Bestandteilen des Schmelzgeräts 1 in besonders einfacher Art und Weise durch eine Sichtkontrolle festgestellt werden, ob das Schmelzgerät 1 mit einem Isolationskörper 6 bestückt ist oder nicht.

### Bezugszeichenliste

- 1: Schmelzgerät
- 2: Gehäuse
- 3: Schmelztank
- 4: Einfüllöffnung
- 5: Wandungsabschnitt
- 6: Isolationskörper
- 7: Haltestruktur
- 8: Gegenstruktur
- 9: Abdeckabschnitt
- 10: Bereich
- 11: Deckel
- 12: Grundkörper
- 13: Dichtkörper
- 14: Einfülltrichter
- 15: Endabschnitt
- 16: Ebene
- 17: Steg
- 18: Griffmulde
- 19: Dichtlippe
- 20: Innenseite
- 21: Außenseite
- 22: Ende
- 23: Pfeil
- 24: Öffnung
- 25: Öffnung

## Patentansprüche

1. Schmelzgerät (1) zum Bereitstellen eines aufgeschmolzenen Mediums, insbesondere zum Bereitstellen eines aufgeschmolzenen Klebstoffs, aufweisend ein Gehäuse (2) und aufweisend einen innerhalb des Gehäuses (2) ausgebildeten Schmelztank (3), wobei das Schmelzgerät (1) eine Einfüllöffnung (4) zum Einfüllen des aufzuschmelzenden Mediums aufweist, wobei das Schmelzgerät (1) einen die Einfüllöffnung (4) umlaufend umschließenden Wandungsabschnitt (5) aufweist, wobei das Schmelzgerät (1) einen den Wandungsabschnitt (5) abdeckenden, die Einfüllöffnung (4) umlaufend umschließenden Isolationskörper (6) aufweist, wobei der Isolationskörper (6) elastisch verformbar ist.

2. Schmelzgerät nach Anspruch 1, wobei der Isolationskörper (6) ein Elastomer aufweist, vorzugsweise aus einem Elastomer besteht, besonders bevorzugt ein Silikonkautschuk oder ein Silikonelastomer aufweist, insbesondere aus Silikonkautschuk oder Silikonelastomer besteht.

3. Schmelzgerät nach Anspruch 1 oder 2, wobei der Isolationsköper (6) den Wandungsabschnitt (5) unmittelbar und flächig kontaktiert.

4. Schmelzgerät nach einem der Ansprüche 1 bis 3, wobei der Isolationskörper (6) kraftschlüssig und/oder formschlüssig mit dem Gehäuse (2) und/oder dem Wandungsabschnitt (5) zusammenwirkt, vorzugsweise unmittelbar mit dem Gehäuse (2) und/oder dem Wandungsabschnitt (5) zusammenwirkt.

5. Schmelzgerät nach einem der Ansprüche 1 bis 4, wobei der Isolationskörper (6) eine Haltestruktur (7) und der Wandungsabschnitt (5) und/oder das Gehäuse (2) und/oder der Schmelztank (3) eine zu der Haltestruktur (7) korrespondierende Gegenstruktur (8) aufweist, insbesondere die Haltestruktur (7) und die Gegenstruktur (8) formschlüssig zusammenwirken, insbesondere die Haltestruktur (7) und/oder die Gegenstruktur (8) in Art eines Hinterschnitts ausgebildet ist.

6. Schmelzgerät nach einem der Ansprüche 1 bis 5, wobei der Isolationskörper (6) einstückig ausgebildet ist.

7. Schmelzgerät nach einem der Ansprüche 1 bis 6, wobei der Isolationskörper (6) eine Innenseite (20) des Wandungsabschnitts (5) zumindest teilweise abdeckt, insbesondere kontaktiert, bevorzugt flächig anliegt.

8. Schmelzgerät nach einem der Ansprüche 1 bis 7, wobei der Isolationskörper (5) einen Abdeckabschnitt (9) aufweist, wobei der Abdeckabschnitt (9) einen an den Wandungsabschnitt (5) angrenzenden Bereich (10) des Schmelzgeräts (1) abdeckt und/oder diesen Bereich (10) unmittelbar kontaktiert.

9. Schmelzgerät nach einem der Ansprüche 1 bis 8, wobei das Schmelzgerät (1) einen, vorzugsweise schwenkbar in dem Gehäuse (2) gelagerten, Deckel (11) aufweist zum Verschließen der Einfüllöffnung (4).

10. Schmelzgerät nach Anspruch 9, wobei der Deckel (11) eine Dichtfläche und der Isolationskörper (6) eine Dichtfläche, vorzugsweise eine in Richtung des Deckels (11) hervorstehende, die Einfüllöffnung (4) umlaufend umschließende Dichtlippe (19), aufweist, wobei in einer die Einfüllöffnung (4) verschließenden Anordnung des Deckels (11) die Dichtfläche des Deckels (11) die Dichtfläche des Isolationskörpers (6) kontaktiert.

11. Schmelzgerät nach Anspruch 10, wobei der Deckel (11) einen Grundkörper (12) und einen in dem Grundkörper (12) federnd gelagerten und/oder beweglich gelagerten und/oder elastisch verformbaren Dichtkörper (13) aufweist, wobei der Dichtkörper (13) die Dichtfläche bildet.

12. Schmelzgerät nach einem der Ansprüche 1 bis 11, wobei der Isolationskörper (6) und der Wandungsabschnitt (5) und/oder der Isolationskörper (6) und das Gehäuse (2) und/oder der Isolationskörper (6) und der Deckel (11) farblich kontrastieren.

13. Schmelzgerät nach einem der Ansprüche 9 bis 12, wobei der Isolationskörper (6) bei geschlossenem Deckel (11) von außen sichtbar ist.

14. Schmelzgerät nach einem der Ansprüche 9 bis 13, wobei das Gehäuse (2) und/oder der Deckel (11) Griffmulden (18) zum Handhaben des Deckels (11) aufweist, vorzugsweise der Isolationskörper (6) sich bis in den Bereich der Griffmulden (18) erstreckt.

15. Isolationskörper zur Verwendung als Isolationskörper (6) in einem Schmelzgerät (1) nach einem der Ansprüche 1 bis 14.
